# EUROPÄISCHE PATENTSCHRIFT

(11) **EP 1 495 893 B1**
(45) Veröffentlichungstag und Bekanntmachung des Hinweises auf die Patenterteilung: **25.04.2007**
(21) Anmeldenummer: 04015164.9
(22) Anmeldetag: 29.06.2004
(51) Int. Cl.: B60J 7/20

(54) **Cabriolet-Fahrzeug**
Convertible vehicle
Véhicule convertible

(30) Priorität: 04.07.2003 DE 20310298 U
(43) Veröffentlichungstag der Anmeldung: 12.01.2005
(73) Patentinhaber: Wilhelm Karmann GmbH, 49084 Osnabrück (DE)
(72) Erfinder: van Berkum, Wim, 49179 Ostercappeln (DE)

(56) Entgegenhaltungen:
- EP-A- 1 022 175
- DE-A- 10 124 938
- DE-U- 29 608 251

## Beschreibung

Die Erfindung betrifft ein Cabriolet-Fahrzeug mit einem Verdeckkasten, der von einer variablen Trennvorrichtung zumindest bereichsweise begrenzbar ist, nach dem Oberbegriff des Anspruchs 1.

Die DE 29901054 U1 zeigt ein Cabriolet-Fahrzeug mit einem Verdeckkasten, der gegenüber dem Kofferraum durch eine Trennvorrichtung variabel abteilbar ist. Bei geschlossenem Dach ist dabei ein Bodenteil, das bei abgelegtem Dach den Verdeckkasten nach unten begrenzt, aufwärts verlagert und bildet somit eine obere Barriere für in den Kofferraum eingeschobenes Gepäck. In dieser Stellung ist daher die Trennvorrichtung frei von einer Trennfunktion und aufgrund des verbleibenden Eigenvolumens eher störend.

Der Erfindung liegt das Problem zugrunde, ein Cabriolet-Fahrzeug der genannten Art hinsichtlich einer variablen Trennvorrichtung zwischen Kofferraum und Verdeckkasten zu verbessern.

Die Erfindung löst dieses Problem durch ein Cabriolet-Fahrzeug mit den Merkmalen des Anspruchs 1. Vorteilhafte Ausgestaltungen des Gegenstandes der Erfindung ergeben sich aus den weiteren Ansprüchen 2 bis 12.

Durch die erfindungsgemäße Ausbildung entfaltet die Trennvorrichtung auch bei geschlossenem Dach, wenn kein Verdeckkasten benötigt wird, einen Nutzen. Durch den geschaffenen zusätzlichen Ablageraum können etwa Kleinteile, die ansonsten im Kofferraum herumfliegen könnten, sicher verstaut werden.

Wenn dieser Ablageraum vom Kofferraum aus zugänglich ist, ist der Be- und Entladekomfort erhöht.

Insbesondere ist durch die Möglichkeit einer Heckwärtsverlagerung der zusätzlichen Ablage der Be- und Entladekomfort weiter erhöht, da die Ablage dann in den Nahbereich der durch die offene Heckklappe gebildeten Öffnung verbringbar und somit sehr gut zugänglich ist.

Hierfür kann besonders einfach die Trennvorrichtung nach Art einer Schublade ausgebildet sein. Zudem ist dann eine besonders gute Sicherung von in die zusätzliche Ablage eingebrachten Kleinteilen erreicht. Um dennoch einen großen Verdeckkasten zu ermöglichen, kann vorteilhaft ein Teil der Seitenwandungen der Schublade einklappbar sein, etwa die in Fahrzeuglängsrichtung gelegenen Wandungen, um somit die Breite des zur Verfügung stehenden Verdeckkastens zu vergrößern.

Die Seitenwandungen können zur Verminderung des konstruktiven Aufwands dabei durch das sich ablegende Dach selbst einklappbar und durch Federkraft bei Aufwärtsbewegung des Daches im Schließsinn und daraus resultierender Entlastung wieder selbsttätig aufstellbar sein.

Eine besonders weite Verlagerbarkeit der Trennvorrichtung nach hinten kann durch teleskopische seitliche Führungsschienen für die Schublade ermöglicht werden.

Insbesondere kann oder können zumindest das oder die Bodenteil(e) der Trennvorrichtung mit einer Teppichkaschierung versehen sein, um so auch bei Verwendung als Ablage eine angenehme Optik und Rutschfestigkeit zu bieten.

Weitere Vorteile und Merkmale der Erfindung ergeben sich aus einem in der Zeichnung dargestellten und nachfolgend erläuterten Ausführungsbeispiel des Gegenstandes der Erfindung.

In der Zeichnung zeigt:
- Fig. 1: eine seitliche schematische Ansicht eines Heckbereichs eines erfindungsgemäßen Cabriolet-Fahrzeugs bei geschlossenem Dach und einer vorne befindlichen und horizontal verlagerbaren Trennvorrichtung, angedeutet durch einen heckwärts weisenden Verlagerungspfeil und eine gestrichelt eingezeichnete Ablage,
- Fig. 2: eine perspektivische Ansicht der Trennvorrichtung von schräg hinten in vorderer Verdeckaufnahmestellung,
- Fig. 3: eine perspektivische Ansicht von schräg hinten, etwa entsprechend dem Detail III in Fig. 2,
- Fig. 4: eine ähnliche Ansicht wie Fig. 3, jedoch mit abgelegtem Dach, angedeutet durch einen die Seitenwandung einklappenden und niederhaltenden Querspriegel des Daches.

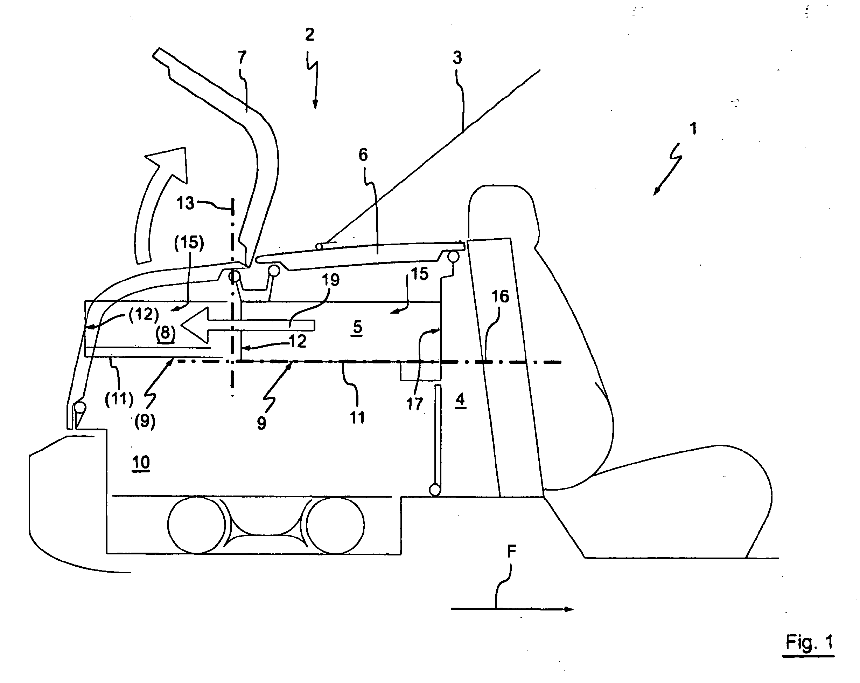

Das erfindungsgemäße Cabriolet-Fahrzeug 1 ist in Fig. 1 lediglich in seinem Heckbereich 2 schematisch dargestellt. Es umfaßt ein bewegliches Dach 3, das in der Darstellung nach Fig. 1 geschlossen ist und teilweise oder vollständig aus starren Teilen bestehen kann oder auch außerhalb einer Heckscheibe ganz mit einer flexiblen Bespannung versehen sein kann. Das Dach 3 ist zu seiner Öffnung in der Karosserie 4 unterhalb eines Deckelteils 6 in einem Verdeckkasten 5 ablegbar. Hierfür ist das Deckelteil 6 in seinem hinteren Bereich an der Karosserie 4 schwenkbeweglich angebunden. Es kann - wie in Fig. 1 dargestellt - ein gegenüber einer Kofferraumklappe 7 separates Teil ausbilden oder - nicht gezeichnet - einteilig mit dieser ausgebildet sein.

Der Verdeckkasten 5 ist für das Dach 3 lediglich erforderlich, wenn dieses ganz oder teilweise geöffnet ist. Bei geschlossenem Dach 3 (Fig. 1) ist er entbehrlich. Um den Raum des Verdeckkastens 5 dann nicht ungenutzt belassen zu müssen, ist dieser zumindest teilweise von einer zwischen der Stellung mit abgelegtem Dach 3 - Verdeckaufnahmestellung - und der Stellung mit geschlossenem Dach 3 - Gepäckauf-nahmestellung - variablen Trennvorrichtung 9 begrenzt. Bei abgelegtem Dach 3 stellt diese eine Abtrennung zwischen dem Verdeckkasten 5 und einem angrenzend gelegenen Kofferraum 10 dar. Bei geschlossenem Dach 3 bildet diese eine unten noch näher erläuterte zusätzliche Ablage 8 aus.

Die Trennvorrichtung 9 umfaßt im Ausführungsbeispiel ein bei abgelegtem Dach 3 den gebildeten Verdeckkasten 5 unterseitig begrenzendes und im wesentlichen plattenförmiges Bodenteil 11. Auch eine Ausbildung mit mehreren Bodenteilen ist möglich. Ebenso ist es denkbar, daß das oder die Bodenteil(e) 11 nicht oder nicht vollständig plattenartig, sondern zumindest bereichsweise flexibel ausgebildet ist oder sind.

Rückseitig weist der Verdeckkasten 5 als rückwärtige Abschlußwandung ein im wesentlichen plattenförmiges Abschlußteil 12 auf, das aufrecht steht, also gar nicht oder nur wenig (bis zu wenigen zehn Grad) gegen eine Vertikale 13 geneigt ist. Das Abschlußteil 12 kann zumindest eine Ein- oder Durchgriffsöffnung 14 umfassen.

Weiterhin umfaßt die Trennvorrichtung 9 hier seitliche Wandungen 15, die der Fahrzeuglängsrichtung folgen und jeweils an ihrem unteren Rand um Horizontalachsen 16 schwenkbar sind. Mit dem hinteren Abschlußteil 12 und einer in Fahrtrichtung F vorderen und ebenfalls aufrecht stehenden Wandung 17 komplettieren sie die Trennvorrichtung 9 zu einem oben offenen und ansonsten geschlossenen Kasten. Die Plattenkörper 11, 12, 15, 17 können aus einem Leichtbaumaterial gefertigt sein, etwa aus einem Polypropylen-Glasfaser-Gemisch. Zur optischen und haptischen Verbesserung kann eine Kaschierung der Oberflächen im gebildeten Kasten mit einem Nadelvlies oder dergleichen vorgesehen sein. Dieses kann zusätzlich an den Achsen 16 Filmscharniere ausbilden.

Sowohl der vorderen Wandung 17 als auch dem hinteren Abschlußteil 12 können kreisbogensegmentförmige Führungskulissen 18 zugeordnet sein, in denen der jeweils obere Rand der seitlichen Wandungen 15 bei Verschwenken um die Achsen 16 geführt ist.

Zudem ist die gesamte Trennvorrichtung 9 in seitlichen Führungsschienen - nicht gezeichnet - gehalten, die sich in Fahrzeuglängsrichtung erstrecken. Mit Hilfe dieser Führungsschienen ist die Trennvorrichtung 9 horizontal nach hinten verlagerbar (Pfeil 19 in Fig. 1). Bei entsprechender Neigung der Führungsschienen kann die Heckwärtsbewegung auch mit einem Abwärtsoder insbesondere Aufwärtsbewegen verbunden sein.

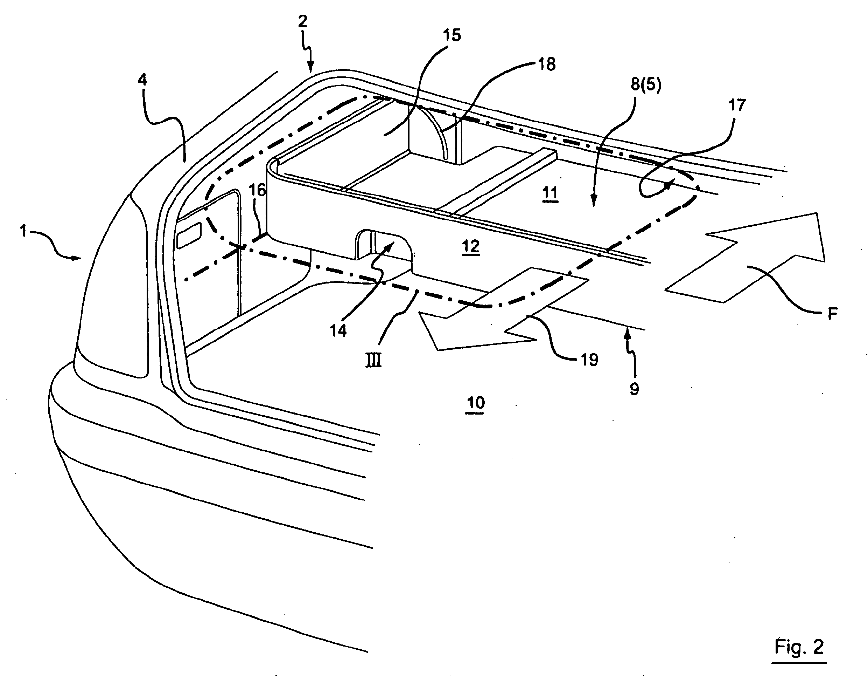

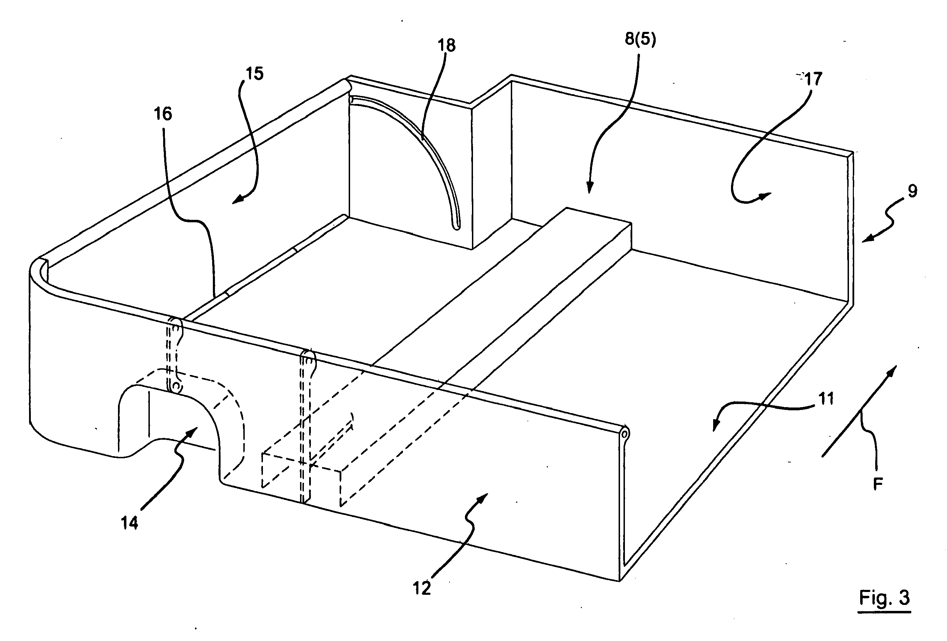

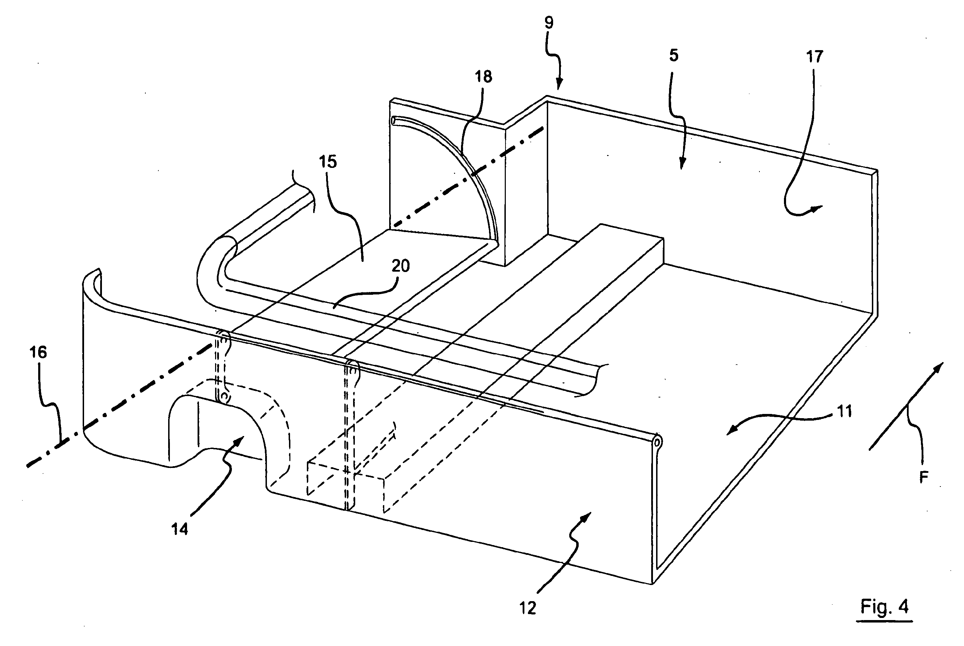

Die Bewegung der Trennvorrichtung 9 aus ihrer den Verdeckkasten 5 zur Aufnahme des abgelegten Daches 3 bildenden Stellung (Fig. 4) ist nur im unbelasteten Zustand des Verdeckkastens 5 möglich, also bei zumindest nahezu geschlossenem Dach (Fig. 1 bis Fig. 3).

Dabei kann ein Sicherungsschalter vorgesehen sein, der von der nach vorne verlagerten Trennvorrichtung 9 zwangsbetätigt wird und dadurch eine Freigabe der Dachablage ermöglicht, wohingegen bei nicht gedrücktem Schalter die Dachöffnung blockiert ist. Ein Öffnen des Daches 3 bei nach hinten verlagerter Trennvorrichtung 9 ist dadurch ausgeschlossen.

Zur Öffnung des Daches 3 muß die Trennvorrichtung 9 in nach vorne in Fahrtrichtung F verlagerter Extremposition stehen. Das Bodenteil 11 begrenzt den dann dadurch gebildeten Verdeckkasten 5 unterseitig. Um eine maximale Breite des Raumes für das aufgenommene Dach 3 zu ermöglichen, sind die seitlichen Wandungen 15, wie oben beschrieben, um die Achsen 16 einschwenkbar. Dieses Einschwenken kann besonders einfach von einem Teil des Daches 3, hier einem Querspriegel 20, bei der Dachablage ohne weitere Steuer- oder Antriebsorgane bewirkbar sein. Mit eingeklappten Seitenwandungen 15 steht damit für die Dachablage die volle Innenbreite der Karosserie 4 zur Verfügung. Der Verdeckkasten 5 ist dann unmittelbar nur von dem Bodenteil 11 sowie der vorderen Wandung 17 und dem hinteren Abschlußteil 12 gebildet. Über dem abgelegten Dach 3 kann dann der Verdeckkastendeckel 6 geschlossen werden.

Beim Schließen des Daches 3 schwenken die Seitenwandungen 15 bei Entlastung von der Gewichtskraft der Dachteile (Spriegel 20) aufgrund einer Federbelastung oder ähnlicher Vorspannung selbsttätig wieder in die aufgerichtete Stellung. Es versteht sich, daß zur Bewegung der Seitenwandungen 15 auch gesonderte Antriebe vorgesehen sein können, was jedoch Gewicht und Fertigungsaufwand erhöht.

Bei geschlossenem Dach 3 ist somit automatisch der oben beschriebene Kasten mit umlaufenden Wandungen 12, 15, 17 als zusätzliche nutzbare Ablage 8 gebildet, der manuell oder ebenfalls angetrieben an den Führungsschienen in Richtung des Pfeils 19 verlagert werden kann und damit unterhalb der geöffneten Kofferraumklappe 7 von oben zugänglich ist.

Der gebildete zusätzliche Ablageraum 8 ist unterseitig von dem Bodenteil 11 begrenzt, das in Doppelfunktion bei aufgenommenem Dach 3 den Verdeckkasten 5 unterseitig begrenzt. Anstelle des hier gezeigten starren Bodenteils 11 könnte bei Verwendung eines flexiblen Bodenteils dieses etwa nach Art einer Tasche bei Befüllung mit Kleinteilen nach unten ausgebeult werden und dennoch seine Tragefunktion erfüllen.

Ebenso bilden die vordere und hintere Wandung 17, 12 des Verdeckkastens 5 in Doppelfunktion bei geschlossenem Dach Begrenzungen der Ablage 8. Die Seitenwandungen 15 erfüllen hier nur die Funktion, die Ablage 8 seitliche abzuschließen, könnten jedoch - anders als gezeichnet - je nach Dach- und Karosserieausbildung auch starrer Bestandteil eines Verdeckkastens sein.

Zur Verlagerung der Ablage 8 in und gegen die Richtung des Pfeils 19 nach Art einer Schublade können die Führungsschienen teleskopisch ausgebildet sein, um einen besonders weiten Auszug zu ermöglichen und sicherzustellen, daß die Ablage 8 über ihre gesamte Tiefe von oben bei geöffneter Kofferraumklappe 7 frei zugänglich ist. Dabei ist eine Auszugssperre zur Begrenzung eines maximalen Auszugweges vorgesehen. Zudem kann eine vollständige Blockierung des Auszugs der Trennvorrichtung 9 bei abgelegtem Dach 3 vorgesehen sein.

Um zu vermeiden, daß bei Dachöffnung das Dach in einen noch von Gepäckstücken belegten Verdeckkasten 5 abgelegt wird, kann ein Detektor, etwa eine Waage für das Bodenteil 11 oder eine Lichtschranke, vorgesehen sein, der die Befüllbarkeit des Verdeckkastens 5 überwacht.

## Patentansprüche

1. Cabriolet-Fahrzeug (1) mit einem im rückwärtigen Fahrzeugbereich (2) in einem Verdeckkasten (5) ablegbaren Dach (3), wobei der Verdeckkasten (5) bei abgelegtem Dach (3) an einen Kofferraum (10) angrenzend gelegen ist und zumindest bereichsweise von einer beweglichen Trennvorrichtung (9) mit zumindest einem Bodenteil (11) begrenzbar und gegenüber dem Kofferraum (10) abteilbar ist,
**dadurch gekennzeichnet,**
**daß** zumindest ein Teil der Trennvorrichtung (9) bei geschlossenem Dach (3) als unterseitige Begrenzung für einen zusätzlichen Ablageraum (8) dient.

2. Cabriolet-Fahrzeug nach Anspruch 1,
**dadurch gekennzeichnet,**
**daß** der zusätzliche Ablageraum (8) vom Kofferraum (10) aus zugänglich ist.

3. Cabriolet-Fahrzeug nach einem der Ansprüche 1 oder 2,
**dadurch gekennzeichnet,**
**daß** der zusätzliche Ablageraum (8) von zumindest einem im wesentlichen plattenförmigen Bodenteil (11) der Trennvorrichtung (9) unterseitig begrenzt ist.

4. Cabriolet-Fahrzeug nach einem der Ansprüche 1 bis 3,
**dadurch gekennzeichnet,**
**daß** die Trennvorrichtung (9) bei geschlossenem Dach (3) heckwärts verlagerbar ist.

5. Cabriolet-Fahrzeug nach Anspruch 4,
**dadurch gekennzeichnet,**
**daß** die Trennvorrichtung (9) neben dem zumindest einen Bodenteil (11) aufragbare Wandungen (12;15;17) umfaßt und nach Art einer Schublade heckwärts verlagerbar ist.

6. Cabriolet-Fahrzeug nach einem der Ansprüche 4 oder 5,
**dadurch gekennzeichnet,**
**daß** die Trennvorrichtung (9) an in Fahrzeuglängsrichtung erstreckten Führungsschienen gehalten ist.

7. Cabriolet-Fahrzeug nach Anspruch 6,
**dadurch gekennzeichnet,**
**daß** die Führungsschienen teleskopisch ausgebildet sind.

8. Cabriolet-Fahrzeug nach einem der Ansprüche 4 bis 7,
**dadurch gekennzeichnet,**
**daß** eine Auszugssperre vorgesehen ist, die zumindest bei abgelegtem Dach (3) wirksam ist.

9. Cabriolet-Fahrzeug nach einem der Ansprüche 5 bis 8,
**dadurch gekennzeichnet,**
**daß** zumindest ein Teil der Seitenwandungen (15) einklappbar ist.

10. Cabriolet-Fahrzeug nach Anspruch 9,
**dadurch gekennzeichnet,**
**daß** seitlich der Fahrzeuglängsrichtung folgende Wandungen (15) der Trennvorrichtung (9) einklappbar sind.

11. Cabriolet-Fahrzeug nach einem der Ansprüche 9 oder 10,
**dadurch gekennzeichnet,**
**daß** der einklappbare Teil (15) der Seitenwandungen durch die Ablagebewegung des Daches (3) einklappbar ist.

12. Cabriolet-Fahrzeug nach einem der Ansprüche 9 bis 11,
**dadurch gekennzeichnet,**
**daß** der einklappbare Teil (15) der Seitenwandungen im Aufklappsinn vorgespannt sind.

## Claims

1. A cabriolet vehicle (1) with a roof (3) which can be stored in the rear vehicle area (2) in a soft-top case (5), whereby the soft-top case (5), when the roof (3) is stored, is situated such that it borders on a boot space (10) and is, at least in areas, able to be delimited by a movable separating device (9) with at least one base part (11) and is able to be divided over the boot space (10),
**characterised in that**
at least one part of the separating device (9), when the roof (3) is closed, serves as a lower-side delimitation for an additional storage space (8).

2. The cabriolet vehicle according to Claim 1,
**characterised in that**
the additional storage space (8) is accessible from the boot space (10).

3. The cabriolet vehicle according to one of Claims 1 or 2,
**characterised in that**
the additional storage space (8) is delimited on the lower side by at least one substantially flat-form base part (11) of the separating device (9).

4. The cabriolet vehicle according to one of Claims 1 to 3,
**characterised in that**
the separating device (9) is backwardly displaceable when the roof (3) is closed.

5. The cabriolet vehicle according to Claim 4,
**characterised in that**
the separating device (9) includes, besides the at least one base part (11), walls (12; 15; 17) which can be made to stand up, and is backwardly displaceable in the manner of a drawer.

6. The cabriolet vehicle according to one of Claims 4 or 5,
**characterised in that**
the separating device (9) is held at guide rails extending in the vehicle longitudinal direction.

7. The cabriolet vehicle according to Claim 6,
**characterised in that**
the guide rails are formed in a telescopic manner.

8. The cabriolet vehicle according to one of Claims 4 to 7,
**characterised in that**
a pull-out lock is provided which is active at least when the roof (3) is stored.

9. The cabriolet vehicle according to one of Claims 5 to 8,
**characterised In that**
at least one part of the side walls (15) is able to be folded in.

10. The cabriolet vehicle according to Claim 9,
**characterised in that**
successive walls (15) of the separating device (9) can be folded in laterally in relation to the vehicle longitudinal direction.

11. The cabriolet vehicle according to one of Claims 9 or 10,
**characterised in that**
the part (15) of the side walls which can be folded in is able to be folded in by means of the roof (3) storing movement.

12. The cabriolet vehicle according to one of Claims 9 to 11,
**characterised in that**
the part (15) of the side walls which can be folded in is pretensioned in the folding-up direction.

## Revendications

1. Véhicule cabriolet (1) avec un toit (3) pouvant être déposé dans la zone de véhicule (2) arrière dans un caisson de capote (5), le caisson de capote (5) étant situé de façon contiguë à un coffre à bagages (10) lorsque le toit (3) est déposé et pouvant être délimité au moins par endroits par un dispositif de séparation (9) mobile avec au moins une partie de fond (11) et pouvant être divisé par rapport au coffre à bagages (10),
**caractérisé en ce que**
au moins une partie du dispositif de séparation (9) sert de délimitation côté inférieur pour un espace de dépose (8) supplémentaire lorsque le toit (3) est fermé.

2. Véhicule cabriolet selon la revendication 1,
**caractérisé en ce que**
l'espace de dépose (8) supplémentaire est accessible à partir du coffre à bagages (10).

3. Véhicule cabriolet selon l'une quelconque des revendications 1 ou 2,
**caractérisé en ce que**
l'espace de dépose (8) supplémentaire est limité côté inférieur par au moins une partie de fond (11) sensiblement en forme de plaque du dispositif de séparation (9).

4. Véhicule cabriolet selon l'une quelconque des revendications 1 à 3,
**caractérisé en ce que**
le dispositif de séparation (9) peut être déplacé en arrière lorsque le toit (3) est fermé.

5. Véhicule cabriolet selon la revendication 4,
**caractérisé en ce que**
le dispositif de séparation (9) comprend des parois (12 ; 15 ; 17) pouvant s'élever à côté de la au moins une partie de fond (11) et peut être déplacé en arrière à la façon d'un tiroir.

6. Véhicule cabriolet selon l'une quelconque des revendications 4 ou 5,
**caractérisé en ce que**
le dispositif de séparation (9) est maintenu sur des rails de guidage étendus dans le sens longitudinal du véhicule.

7. Véhicule cabriolet selon la revendication 6,
**caractérisé en ce que**
les rails de guidage sont réalisés de façon télescopique.

8. Véhicule cabriolet selon l'une quelconque des revendications 4 à 7,
**caractérisé en ce que**
il est prévu un blocage d'extension qui est efficace au moins lorsque le toit (3) est déposé.

9. Véhicule cabriolet selon l'une quelconque des revendications 5 à 8,
**caractérisé en ce que**
au moins une partie des parois latérales (15) peut être repliée.

10. Véhicule cabriolet selon la revendication 9,
**caractérisé en ce que**
les parois (15), suivant latéralement le sens longitudinal du véhicule, du dispositif de séparation (9) peuvent être repliées.

11. Véhicule cabriolet selon l'une quelconque des revendications 9 ou 10,
**caractérisé en ce que**
la partie (15) repliable des parois latérales peut être repliée par le mouvement de dépose du toit (3).

12. Véhicule cabriolet selon l'une quelconque des revendications 9 à 11,
**caractérisé en ce que**
la partie (15) repliable des parois latérales est prétendue dans le sens de relèvement.
